(19)

Europäisches Patentamt
European Patent Office
Office européen des brevets

(11) **EP 3 598 373 A1**

(12) **EUROPEAN PATENT APPLICATION**

(43) Date of publication:
**22.01.2020   Bulletin 2020/04**

(51) Int Cl.:
**G06Q 30/06** *(2012.01)*    **G06Q 30/02** *(2012.01)*

(21) Application number: **18184120.6**

(22) Date of filing: **18.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Seulo Palvelut Oy**
**04201 Kerava (FI)**

(72) Inventors:
• **Heinonen, Veijo**
**04500 Kellokoski (FI)**
• **Saikko, Mikko**
**53850 Lappeenranta (FI)**

(74) Representative: **Papula Oy**
**P.O. Box 981**
**00101 Helsinki (FI)**

(54) **DETERMINING PRODUCT RELEVANCY**

(57)     Determining the relevancy of a product to a user on, for example, an e-commerce platform has various advantages. For example, if more relevant products can be displayed to a user, the limited display area of a client device can be utilised more efficiently. It is an objective to provide a computing apparatus for determining relevancy of products to a user. A computing apparatus is configured to calculate a user attribute profile vector based on a user action history of a user. The computing apparatus may then calculate a similarity score between the user attribute profile vector and a product attribute vector of a product. A client device, a computing apparatus, methods, and a computer program are described.

FIG. 3

**Description**

TECHNICAL FIELD

The disclosure relates to an electronic device and a computing apparatus, and more particularly to a client device and a computing apparatus for determining product relevancy to a user. Furthermore, the disclosure relates to corresponding methods and a computer program.

BACKGROUND

Determining the relevancy of a product to a user on, for example, an e-commerce platform has various uses. For example, regardless of the type of device a user accesses an e-commerce platform with, the display area of the device may be limited. This may limit the number of products that can be displayed to the user at a time. These factors may be especially significant with mobile devices. Additionally, the user interface for interacting with the e-commerce platform may be limited. If the e-commerce platform comprises a high number of products, the user may be required to browse through numerous irrelevant products while struggling with these limitations. If the relevancy of various products to the user can be determined, this information can be used, for example, to utilise the limited display area of the client device more efficiently.

Patent publication US 2013/0198022 A1 discloses a method and apparatus of determining a linked list of candidate products. The method computes similarity scores between values of a first product and a second product with respect to each non-nominal attribute and each nominal attribute. Based on the similarity scores, a linked list of candidate products that area similar to the first product can be created.

Patent publication GB 2548336 A discloses a method of identifying recommended media content. The method comprises: accessing media content item tokens for respective media content items available to the user; accessing a user preference token relating to the user; comparing the user preference token with the media content item tokens; and identifying the recommended media content items based on said comparison.

Patent publication US 2017/0337612 A1 discloses a system and method to evaluate the affinity of a collection of sale items to a user's interests. Categories of items that interest a user are identified by analysing the user's interaction with an online shopping site. Based on categories of items that both interest the user and are in a pre-defined collection of items for sale, an affinity score between the pre-defined collection of items for sale and the user's interests is determined. Based at least partly on the affinity scores of the pre-defined collections of items for sale a subset of the plurality of pre-defined collections of items is selected for sale to display to the user.

SUMMARY

This summary is provided to introduce a selection of concepts in a simplified form that are further described below in the detailed description. This summary is not intended to identify all key features or all essential features of the claimed subject matter, nor is it intended to be used to limit the scope of the claimed subject matter.

It is an objective to provide a computing apparatus for determining relevancy of products to a user. The object is achieved by the features of the independent claims. Further implementation forms are provided in the dependent claims, the description and the figures.

According to a first aspect, a computing apparatus is configured to: calculate a user attribute profile vector based on a user action history of a user; and calculate a similarity score between the user attribute profile vector and a product attribute vector of a product, wherein only attributes that are relevant to the product are used for the calculation from the user attribute profile vector. With these configurations, the computing apparatus can, for example, determine how relevant a product is to a user. The computing apparatus or a client device may use this relevancy information to, for example, display relevant products to a user.

In an implementation form of the first aspect, the computing apparatus is further configured to: process an order for a plurality of products using at least the similarity score of each product. With these configurations, the computing apparatus can, for example, enable the client device to display more relevant products to the user first.

In a further implementation form of the first aspect, the computing apparatus is further configured to transmit data indicating the processed order of the plurality of products to a client device. With these configurations, the computing apparatus can, for example, enable the client device to display the plurality of products according to the order so that, for example, most relevant products are displayed to the user first. Thus, the possibly limited display area of the client device is utilised efficiently.

In a further implementation form of the first aspect, the computing apparatus is further configured to transmit the similarity score to the client device. With these configurations, the computing apparatus can, for example, provide additional information about the products to the client device. Thus, the client device can, for example, provide additional information about the products, such as the similarity scores, to the user.

In a further implementation for of the first aspect, the action history comprises a purchase history of the user. With these configurations, the computing apparatus can, for example, utilise the purchase history of the user in order to determine relevant products to the user.

In a further implementation form of the first aspect, the attributes that are relevant to the product are indicated by the product attribute vector of the product. With these configurations, the computing apparatus can, for example, efficiently determine the relevant attributes that should be used for the calculation of the similarity score.

In a further implementation form of the first aspect, the computing apparatus is further configured to: calculate the similarity score by comparing corresponding attribute values in the attribute profile vector and in the product attribute vector. With these configurations, the computing apparatus can, for example, efficiently calculate the similarity score, and the similarity score reflects the relevance of the product to the user.

In a further implementation form of the first aspect the product attribute vector comprises: a logical true value, indicating that a corresponding attribute is true for the product; and a logical false value, indicating that a corresponding attribute is false for the product. With these configurations, the attribute values can be stored to the computing apparatus using a small amount of data. For example, each attribute value may be indicated by a single bit.

In a further implementation form of the first aspect, each attribute value in the user attribute profile vector is in range of 0 to 1. With these configurations, the calculations of the similarity scores can be implemented in a simple manner on the computing apparatus, since the attribute value in the user attribute profile vector are represented on the same scale.

In a further implementation form of the first aspect, the computing apparatus is further configured to: calculate an ordering score for each product in the plurality of products based on a location of the product and locations of previously purchased products by the user in a product tree; and order the plurality of products using the ordering score of each product and the similarity score of each product. With these configurations, the computing apparatus can, for example, take into account the action history of the user in the ordering of the products in addition to the attributes of the products.

In a further implementation form of the first aspect, the computing apparatus is further configured to: store the user attribute profile vector in a user profile of the user. With these configurations, the computing apparatus does not need to recalculate the user attribute profile vector each time the user attribute profile vector is needed. This may, for example, save computational resources and lower energy consumption.

In a further implementation form of the first aspect, the computing apparatus is further configured to: store each similarity score in the user profile. With these configurations, the computing apparatus does not need to recalculate the similarity scores each time the similarity scores are needed. This may, for example, save computational resources and lower energy consumption.

According to a second aspect, a client device is configured to: receive data indicating an order of a plurality of products from a computing apparatus; display at least one product view to a user according to the order indicated by the data received from the computing apparatus, wherein each product view in the at least one product view comprises: a name of a product; and a price of the product; wherein the order of the plurality of products is based on a calculated similarity score between a user attribute profile vector of the user and a product attribute vector of each product in the plurality of products, wherein only attributes that are relevant to the product are used for the calculation from the user attribute profile vector. With these configurations, the client device can, for example, efficiently utilise the possibly limited display area of the client device so that relevant products are displayed to the user first. Additionally, since the user may find relevant products more easily and more quickly, the power consumption and amount of data transferred to/from the client device may be reduced.

In an implementation form of the second aspect, the client device is further configured to receive the calculated similarity score from the computing apparatus; and display a displayed similarity score in the at least one product view, wherein the displayed similarity score is associated with the calculated similarity score. With these configurations, the client device can, for example, provide additional information about the products to the user.

In a further implementation form of the second aspect, the client device is further configured to: display an attribute in the at least one product view, wherein the attribute is associated with the product attribute vector of a product displayed in the product view. With these configurations, the client device can, for example, provide additional information about the products to the user.

According to a third aspect, a method comprises: calculating a user attribute profile vector based on a user action history of a user; and calculating a similarity score between the user attribute profile vector and a product attribute vector of each product in a plurality of products, wherein only attributes that are relevant to the product are used for the calculation from the user attribute profile vector.

According to a fourth aspect, a method comprises: receiving data indicating an order of a plurality of products from a computing apparatus; displaying at least one product view to a user according to the order indicated by the data received from the computing apparatus, wherein each product view in the at least one product view comprises: a name of a product; and a price of the product; wherein the order of the plurality of products is based on a calculated similarity score between a user attribute profile vector of the user and a product attribute vector of each product in the plurality of products, wherein only attributes that are relevant to the product are used for the calculation from the user attribute profile vector.

According to a fifth aspect, a computer program is provided, comprising program code configured to perform a method according to the third aspect or the fourth aspect when the computer program is executed on a computer.

Many of the attendant features will be more readily appreciated as they become better understood by reference to the following detailed description considered in connection with the accompanying drawings.

DESCRIPTION OF THE DRAWINGS

The present description will be better understood from the following detailed description read in light of the accompanying drawings, wherein:

FIG. 1 illustrates a schematic representation of a client device and a computing apparatus configured to determine relevancy of products to a user according to an embodiment;
FIG. 2 illustrates a schematic representation of product relevancy determination system according to an embodiment;
FIG. 3 illustrates a schematic representation of product relevancy calculation system according to an embodiment;
FIG. 4 illustrates a schematic representation of a user profile according to an embodiment;
FIG. 5 illustrates a schematic representation of a product attribute vector according to an embodiment;
FIG. 6 illustrates a schematic representation of a food product attribute vector according to an embodiment;
FIG. 7 illustrates a schematic representation of a hygiene product attribute vector according to an embodiment;
FIG. 8 illustrates a schematic representation of a hygiene product attribute vector according to another embodiment;
FIG. 9 illustrates a schematic representation of user action history according to an embodiment;
FIG. 10 illustrates a schematic representation of a user attribute profile according to an embodiment;
FIG. 11 illustrates a schematic representation of a user attribute profile according to another embodiment;
FIG. 12 illustrates a schematic representation of a flow chart of a product display procedure according to an embodiment;
FIG. 13 illustrates a schematic representation of a product display interface according to an embodiment;
FIG. 14 illustrates a schematic representation of a product display interface according to another embodiment;
FIG. 15 illustrates a schematic representation of a product display interface according to another embodiment;
FIG. 16 illustrates a schematic representation of a product view according to an embodiment;
FIG. 17 illustrates a schematic representation of a product view according to another embodiment; and
FIG. 18 illustrates a schematic representation of a product view according to another embodiment.

Like references are used to designate like parts in the accompanying drawings.

DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

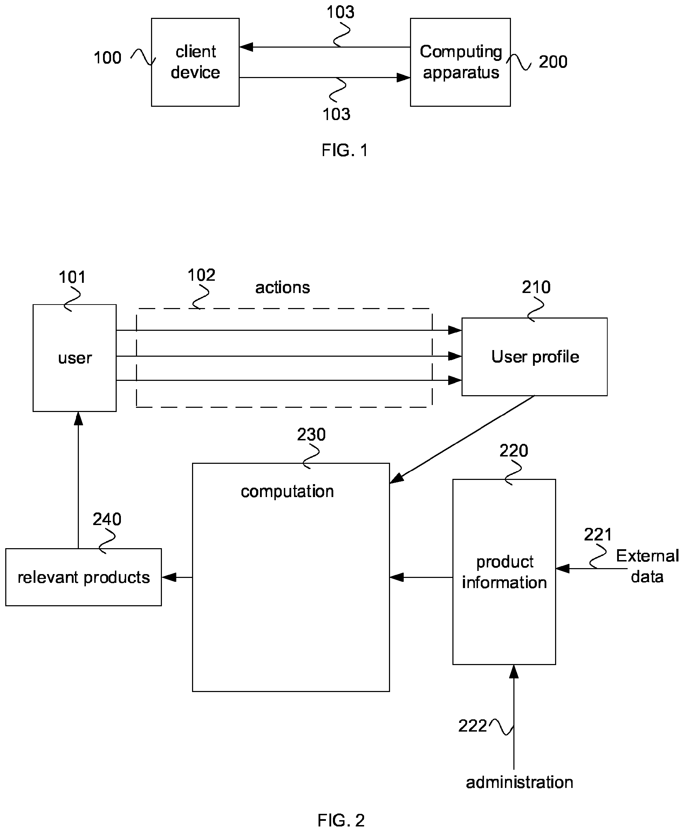

FIG. 1 illustrates a schematic representation of a client device 100 and a computing apparatus 200. The client device 100 can communicate with the computing apparatus 200 using a communication channel 103, and the computing apparatus 200 can communicate with the client device 100 using the communication channel 103. The client 100 may transmit requests to the computing apparatus 200, and the computing apparatus may respond to these requests by transmitting responses to the client device 100. In some embodiments, the client device 100 and the computing apparatus 200 are implemented in the same device. In such embodiments, any functionality of either device may be implemented in this single device.

According to an embodiment, the computing apparatus 200 is configured to calculate a user attribute profile vector based on a user action history of a user and calculate a similarity score between the user attribute profile vector and a product attribute vector of a product, wherein only attributes that are relevant to the product are used for the calculation from the user attribute profile vector. The similarity score may reflect how similar a product is with the previous actions of the user. A low similarity score may indicate high similarity and vice versa. A product of high similarity may be referred to as a relevant product to the user.

According to an embodiment, the client device 100 is configured receive data indicating an order of a plurality of products from the computing apparatus 200. The client device 100 may be further configured to display at least one product view to a user according to the order indicated by the data received from the computing apparatus, wherein each product view in the at least one product view comprises: a name of a product; and a price of the product. The order of the plurality of products can be based on a calculated similarity score between a user attribute profile vector of the user and a product attribute vector of each product in the plurality of products, wherein only attributes that are relevant to the product are used for the calculation from the user attribute profile vector.

The computing apparatus 200 may be further configured to process an order for a plurality of products using at least the similarity score of each product. The computing apparatus can, for example, order/rank the products in a descending or ascending order according to the similarity scores. For example, most relevant products to the user may be first in the processed order.

The computing apparatus 200 may be further configured to transmit data indicating the processed order of the plurality of products to a client device 100. The data may be, for example, list that indicates the order or the similarity scores.

The client device 100 can display the plurality of products according to the order for example so that most relevant products are displayed to the user first. Thus, the possibly limited display area of the client device 100 can be utilised efficiently.

The client device 100 and the computing apparatus 200 may further comprise a processor, a transceiver, a memory, a display unit and/or other components that are not illustrated in FIG. 1. The client device 100 may communicate with, for example, the computing apparatus 200 using a transceiver. The computing apparatus 200 may communicate with, for example, a single or a plurality of client devices 100 using a transceiver. The communication channel 103 may comprise, for example, wireless connections, wired connections, network nodes, network devices, or some combination of these. The communication channel 103 may comprise, for example, internet, Ethernet, 3G, 4G, 5G, LTE, Wi-Fi, or any other wired or wireless connections or some combination of these. For example, if the client device 100 is a mobile device, the communication channel 103 may comprise a wireless connection, such as Wi-Fi, an Internet connection, and a plurality of Ethernet connections. The client device 100 and the computing apparatus 200 may also utilise a plurality of communication channels 103 simultaneously and/or sequentially.

The client device 100 may be any of a wireless terminal, or mobile terminal which is enabled to communicate wirelessly in a wireless communication system, sometimes also referred to as a cellular radio system, or in a wired communication system using a wired connection. A wired connection may also comprise fixed connections, such as optical links. The client device 100 may further be referred to as a mobile telephone, a cellular telephone, a computer, a desktop computer, a computer tablet, or a laptop with wireless or wired capability.

A user may operate the client device 100 through a user interface, UI. Since the amount of display area on the client device 100 can be limited, for example in the case of a mobile phone or even for a desktop computer, the UI may also be limited. For example, on an e-commerce platform, only a limited number of products can be displayed to the user at a time. Therefore, the user experience may be improved, if the limited number of products that can be displayed to the user at once are relevant or pertinent to the user.

The computing apparatus 200 may be any device that can process information, for example, using a processor and may communicate with the client device 100 or a plurality of client devices 100 using, for example, the communication channel 103. The computing apparatus 200 may be also referred to as a server. The computing apparatus 200 may be implemented, for example, using a computer or a plurality of computers, such as a data centre. Alternatively, a computer or a plurality of computers may implement a plurality of computing apparatus 200 using, for example, virtualisation, wherein the computing apparatus 200 may be implemented in software.

A product may be any item that a user may, for example, purchase or view. The user may purchase and/or view the product, for example, on an e-commerce platform. Products may be divided into categories, and these categories may comprise, for example, food products, animal food products, hygiene products, cleaning products, consumer goods etc. These categories may be divided into further subcategories. For example, food products may be divided into vegetables, fruits, meats, dairy products, breads, drinks etc.

FIG. 2 illustrates a schematic representation of a system for determining relevant products to a user according to an embodiment. As a user 101 performs various actions 102 on, for example, an e-commerce platform using the client device 100, an action history comprising these actions 102 can be saved into a user profile 210. An action 102 may be, for example, a product purchase, viewing a product, placing a product into a shopping cart, or a product review. The user profile 210 can be stored, for example, in the memory of the computing apparatus 200. Product information database 220 can also be stored, for example, to the memory of the computing apparatus 200. Herein, any information/data that may be stored to the memory of the computing apparatus 200 may also be stored in some other manner, for example, to an external database. The product information database 220 can be obtained and/or updated from, for example, external data 221 or by inputting data 222. The external data 221 may be provided, for example, by a manufacturer of a product. The product information database 220 can comprise information about plurality of products, and each product can be associated with various attributes.

An attribute may describe any property or characteristics of a product, such as a food product or a consumer good. A plurality of attributes may be relevant to a single product. An attribute may be common for a plurality of products. An attribute and the value of the attribute can be predetermined. Some embodiments of attributes are described below.

Based on the user profile 210 and the product information database 220, the computing apparatus 200 can execute various computational procedures 230. The outputs of these computational procedures 230 may, for example, indicate how well a product in the product information database 220 fits the preferences of a user 101, how similar a product is with previous actions 102 of a user 101, and/or how relevant a product is to a user 101. The computational procedures 230 can be based on the user profile 210 of the user 101 and the product information database 220. Based on the computational procedures 230, the computing apparatus 200 can determine relevant products 240, and the relevant products 240 can be presented to the user 101 through the client device 100. For example, the client device 100 can present relevant products 240 to the user 101 using a user interface, UI. According to an embodiment, the computation procedures 230 may calculate a similarity score 232 for each product in the product information database 220, wherein the similarity score 232 can indicate how well the product fits to the user profile 210. Based on the similarity score 232, the computing apparatus 200 can determine relevant products for the user 101, for example by ranking/ordering the products in the product information database 220 according to their similarity scores 232.

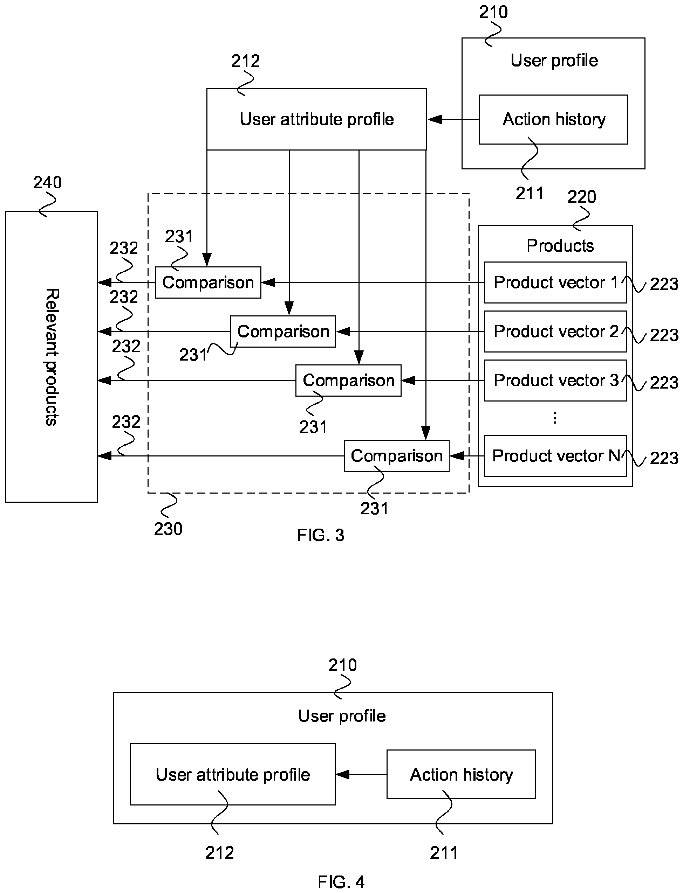

FIG. 3 illustrates a schematic representation of relevance computation procedures 230 according to an embodiment. Based on an action history 221 stored in the user profile 210, a user attribute profile 212 can be computed. For example, the computing apparatus 200 may use the product attribute vectors 223 of the product indicated by the action history 211 to calculate the user attribute profile 212. Herein, an attribute may refer to a property of a product that can be assigned, for example, a numerical value. For example, a food product can be gluten free. This can be indicated by assigning a binary value 1 to a "gluten free" attribute of that product, wherein the value 1 may indicate a logical true. On the other hand, if a product is not gluten free, this field can be assigned value 0, wherein the value 0 may indicate a logical false. Alternatively, a similar attribute may be indicated by a "contains gluten" attribute. Only one of the attributes "gluten free" and "contains gluten" is needed for a product, since these attributes can indicate the same information. It should be appreciated that the term "gluten free" itself does not need to be saved to indicate that a product is gluten free. Instead a certain field of each product in the product information database 220 may be assigned to represent the attribute "gluten free", and only number of the field, for example, may be used. The number of a field may also be referred to as an attribute identification, ID. The user attribute profile 212 may indicate which product attributes are important to the user 101 based on the action history 211 of the user 101. For example, if the user 101 purchases large amounts of gluten free products, the user attribute profile 212 may reflect this. Additionally, the user attribute profile 212 may indicate that the user 101 purchases large amount of gluten free products only in some product category. This may also be taken into account. The user attribute profile 212 may also be referred to as a user attribute profile vector. The fields of the user attribute profile vector 212 may comprise the values of different attributes. If a user 101 has not purchased any items, other information about the user 101, such as items that the user 101 may have placed in a shopping cart, may be used instead of the action history 211. According to an embodiment, the action history 211 comprises a purchase history of the user 101.

According to an embodiment, the product information database 220 may comprise a plurality of product attribute vectors 223, wherein each product attribute vector 223 comprises the product attribute values of a product. The product attribute vectors 223 can be compared to the user attribute profile vector 212 by the comparisons operation 231. The comparison operation 231 may, for example, calculate a quantity that indicates how similar or dissimilar a product attribute vector 223 is with respect to the user attribute profile vector 212. This quantity may be referred to as a similarity score 232 or a calculated similarity score. The similarity score 232 may be calculated for each product in the product information database 220. Based on the values of this quantity for each product, relevant products to the user 101 can be determined.

According to another embodiment, the user attribute profile vector 212 does not need to be calculated. Instead, the comparison operation 231 may directly use the action history 211 of the user 101 and an attribute profile vector 212 to calculate a similarity score 232. The similarity score 232 of each product may be saved, for example, into the user profile 210. The similarity scores 232 may be updated, for example, each time the user 101 preforms an action 102, such as makes a purchase.

FIG. 4 illustrates a schematic representation of the user profile 210 according to another embodiment. In this embodiment, the user profile 210 also comprises the user attribute profile 212 in addition to the action history 211. The computing apparatus 200 can be configured to store the user attribute profile vector 212 in the user profile 210 of the user 101. Since the user attribute profile 212 is stored in the user profile 210, the user attribute profile 212 does not need to be computed every time relevant products are determined for the user 101. Instead, the user attribute profile 212 may be updated, for example, every time the user 101 performs an action and the action history 211 is updated. This may reduce the total amount of computations needed, for example, in cases where the user 101 performs actions less often than relevant products are determined for the user 101. Alternatively, if other actions of the user 101, such as viewing a product, affect the user attribute profile 212, the user attribute profile 212 may be updated each time the user 101 performs such an action. Alternative or in addition to this, the user attribute profile 212 may be updated periodically.

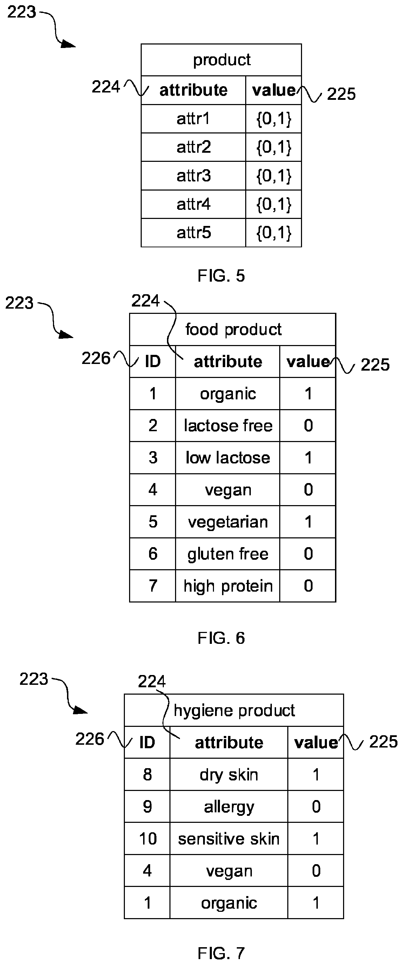

According to an embodiment, attributes that are relevant to a product can be indicated by the product attribute vector of the product. FIG. 5 - FIG. 8 illustrates schematic representations of product attribute vectors illustrating the relevance and utilisation of attributes for different products in some described embodiments.

FIG. 5 illustrates a schematic representation of a product attribute vector 223 according to an embodiment. In this embodiment, the product attribute vector 223 comprises five attributes 224, and the value 225 of each attribute can be either 0 or 1. The values 0 and 1 may indicate logical values false and true, respectively. The number of attributes, name of the attributes, and attribute values presented in this and in the following embodiments are only exemplary.

According to an embodiment, the product attribute vector 223 comprises: a logical true value, indicating that a corresponding attribute is true for the product; and a logical false value, indicating that a corresponding attribute is false for the product.

FIG. 6 illustrates a schematic representation of a product attribute vector 223 of a food product according to an embodiment. In this embodiment, the product attribute vector 223 comprises seven attributes 224, and the values of these attributes 225 indicate whether the attribute is true for this product or not. Furthermore, an identification, ID, 226 is assigned for each attribute 224.

In the case of the food product presented in FIG. 6, the attributes 224 and the corresponding attribute values 225 indicate that the product is organic, low lactose, and vegetarian, and that the product is not lactose free, vegan, gluten free, or does not comprise large amounts of protein. In some embodiments, the name of the attributes 224 does not need to be saved for each product. Instead, the ID 226 of the attribute may be used to indicate the intended attribute. For example, it may be deduced from a separate table that attribute ID 1 corresponds to attribute "organic", attribute ID 2 corresponds to attribute "lactose free" etc.

In some embodiments, the ID 226 does not need to be stored in the product attribute vector 223 either. Instead, only the attribute values 225 may be stored in the product attribute vector 223, and the ordering of the values can indicate the intended attribute. The attributes can be stored, for example, in a separate table, and this single table can be used for the product attribute vectors of all products or for some subset of all products. For example, the attribute vector presented in FIG. 6 may be stored as [1,0,1,0,1,0,0], and a separate table may comprise, for example, the elements [organic, lactose free, low lactose, vegan, vegetarian, gluten free, high protein]. Thus, it can be deduced based on the separate table that the first element of the product attribute vector 223 corresponds to the attribute "organic" etc.

It should also be appreciated that if the attribute values are binary, like is the case for the embodiment of FIG. 6, the bit values may be mapped to, for example, decimal, hexadecimal, ASCII, or Unicode symbols by grouping bits in the product attribute vector 223, and the symbols may be stored in memory.

FIG. 7 illustrates a schematic representation of a product attribute vector 223 of a hygiene product according to an embodiment. Since a hygiene product can be different from a food product in various ways, the product attribute vector 223 of a hygiene product can comprise different attributes 224 compared to a food product. For example, as is illustrated in FIG. 7, a product attribute vector 223 for a hygiene product may comprise, for example, attributes that indicate that the product is suitable for dry or sensitive skin or certain allergies. The attributes of a food product may also relate to an allergy, but the allergies of a hygiene product may be different from a food product. Similarly, different attributes may be relevant for different food products. Herein, comparisons between the attributes of food products and hygiene product are intended to illustrate various attributes and different attributes of different products. It should be appreciated that there can also be significant differences between the attributes of different food products etc.

A hygiene product may also have common attributes with food product. Such attributes may be, as illustrated in FIG. 7, the product being organic or vegan. In the embodiments of FIG. 6 and FIG. 7, only attributes that are applicable to the product in question are illustrated. It should be appreciated that all attributes may be stored for all products or only the relevant attributes may be stored for each product.

Relevant attributes for a product may be determined, for example, using a product tree. Each product may be part of a node of a product tree, and relevant attributes can be determined based on the node. A product tree may be, for example, any structure that groups and/or classifies products. For example, nodes of a product tree may correspond to product categories and subcategories. The product tree may also indicate, for example, different uses of products. Relevant attributes may be determined based on nodes of the product tree. For example, a list of relevant attributes may be determined for a product category so that those attributes are relevant for all products in that category. If an attribute is related to some ingredient that is common for a product category, that attribute may be relevant for the whole product category. Some attributes may be relevant for all products. The use of a product may also determine relevant attributes. For example, "contains milk" may be relevant attribute for plant-based drinks, such as soy milk, due to their probable use as milk replacements.

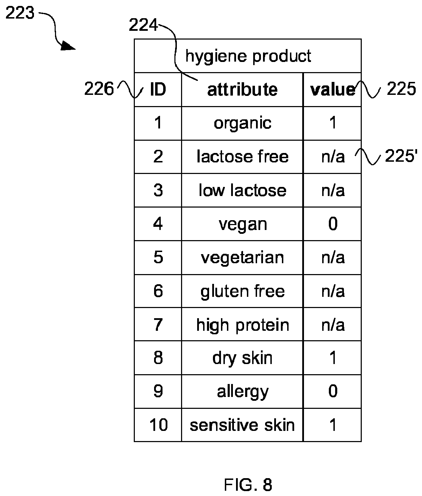

FIG. 8 illustrates a schematic representation of a product attribute vector 223 for a hygiene product according to an embodiment. In this embodiment, also attributes that are not relevant for a hygiene product are presented in the product attribute vector 223. The attributes that are not relevant for the hygiene product of FIG. 8 are indicated by a special value not available, n/a, 225'. Any special value that can be unambiguously distinguished from valid values may be used to indicate that an attribute is not relevant for a certain product. Since in the embodiment of FIG. 8, 0 and 1 are used as valid values, for example, -1 or not a number, NaN, may be used to indicate that an attribute is not relevant to a product. This may be useful in the storing of the product attribute vector 223, because the attribute 224 or the attribute ID 226 may not be need to be stored in/with the product attribute vector 223. Instead, the ordering of the attribute values 225, 225' may be used to indicate which attribute is in question, and the same ordering can be used between different products and product categories that may have different relevant attributes.

For example, if the product attribute vector 223 comprises only the relevant attributes, the food product of FIG. 6 could be represented by the vector [1,0,1,0,1,0,0] and the hygiene product of FIG. 7 could be represented by the vector [1,0,1,0,1]. Since these vectors refer to, at least partly, different attributes, these vectors may not be easily comparable. Therefore, a separate table may be needed for both product categories to indicate the corresponding attributes. On the other hand, if the product attribute vector 223 also comprises the non-relevant attributes, the food product of FIG. 6 could be represented by the vector [1,0,1,0,1,0,0, n/a, n/a, n/a] and the hygiene product of FIG. 8 could be represented by the vector [1, n/a, n/a, 0, n/a, n/a, n/a, 1,0,1]. Since these representations use the same indexing, the products are comparable and correspondence of the indexing with the attributes can be stored into, for example, a single table for all products and product categories. In some embodiments, different indexing may be used for different product groups, and there may be a correspondence table between indices and attributes for each product group.

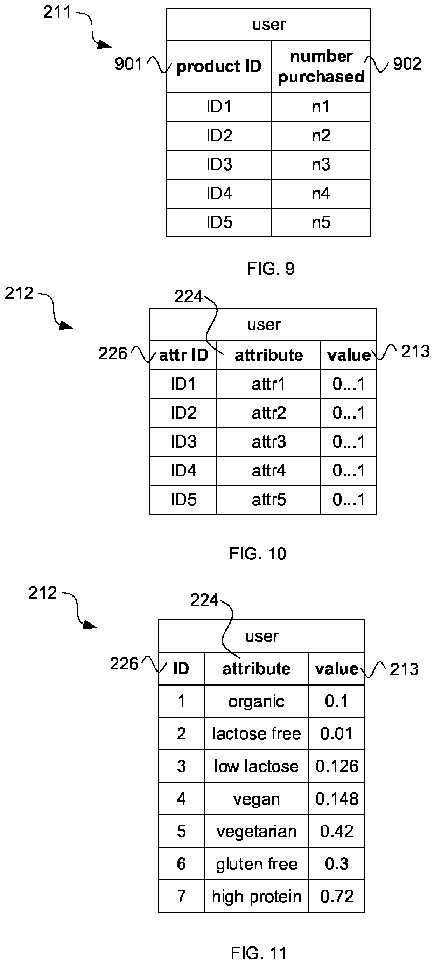

FIG. 9 illustrates a schematic representation of a user action history 211 according to an embodiment. In this embodiment, the action history 211 comprises purchases. Other types of actions may be represented in a similar fashion in the action history 211. In such embodiments, the type of the action, such as purchase, view, or review, may also be stored into the user action history 211. Alternatively, different types of actions may be stored into different tables in the user action history 211. For each product that the user 101 has purchased, a product ID 901 and the number of products purchased 902 can be stored into the user action history 211. In other embodiments, only the IDs 901 of the purchased products may be stored into the user action history 211, and if the same product has been purchased multiple times, the ID 901 is stored as many times as the item has been purchased. In such embodiments, the number of purchases 902 does not need to be stored, and the user action history 211 may comprise only a vector of product IDs 901. Also other information about the purchased items, such as the purchase price, may be stored to the user action history 211. The amount of data stored in the user action history 211 may vary depending on, for example, the user 101 and the products that the user 101 has purchased.

FIG. 10 illustrates a schematic representation of a user attribute profile vector 212 according to an embodiment. In this embodiment, the user attribute profile vector 212 comprises five attributes 224, corresponding IDs 226, and attribute values 213. This is only exemplary and the number of attributes stored in the user attribute profile vector 212 can vary. Each attribute ID 226 corresponds to an attribute 224. The attribute 224 itself does not need to be stored in the user attribute profile vector 212, if the corresponding ID 226 is stored in the user attribute profile vector 212. In the following, the attributes 224 are presented in the figures for illustrative purposes. For each attribute ID 226, the user attribute profile vector 212 comprises a corresponding attribute value 213. The attribute value 213 may describe how well the corresponding attribute fits the action history 211 of the user 101. For example, an attribute value 213 close to 1 for an attribute may indicate that the user has purchased large amounts of products the product attribute vectors 223 of which comprise value 1 for that attribute. Alternatively or in addition to this, the user 101 may have performed other actions related to such products. Therefore, the attribute may be important to the user 101, and it may be beneficial to display products that comprise that attribute value set to 1, since these products may be more relevant for the user 101. On the other hand, attribute values 213 close to 0 may indicate the opposite. The opposite may also be true; a value 213 close to 0 may indicate that the user 101 has purchased large amounts of products that comprise that values set to 1 and vice versa. In the embodiment of FIG. 10, the attribute values 213 may comprise any value between 0 and 1. In other embodiments, the values 213 may be scaled to a different interval, such as from 0 to 100.

According to an embodiment, each attribute value in the user attribute profile vector 211 is in range of 0 to 1.

FIG. 11 illustrates a schematic representation of a user attribute profile vector 212 according to another embodiment. This embodiment is similar to that presented in FIG. 10 except that this embodiment comprises exemplary attributes 224, attribute IDs 226, and attribute values 213. In this embodiment, the value of an attribute corresponding to attribute ID 7, which indicates high protein content in a product, is 0.72. This may indicate that the user 101 has previously performed large amounts of actions related to products that have a high protein content. For example, the user 101 may have purchased large amounts of such products. Therefore, high protein content products may be relevant to the user 101, and it may be beneficial to display high protein content products to the user. On the opposite end of the spectrum, the user 101 may have performed only a small number of actions related to lactose free products, since the value of this attribute is only 0.01 in the user attribute profile 212 presented in FIG. 11. Therefore, it may be beneficial not to display lactose free products to the user 101 in the future, since these products may not be relevant to the user 101.

It should be appreciated that the conclusion presented above with respect to the embodiment of FIG. 11 are based only on the value of a single attribute. In order to determine relevant products to the user 101, it may be beneficial to take into account more attributes than one. It may be beneficial to take into account all attributes relevant for each product. For example, in the embodiment of FIG. 11, if a product is both high in protein and lactose free, it may still be beneficial to display that product to the user 101.

According to an embodiment, the product attribute vector for a product with product ID i may be represented in the following fashion

$$P_i = [\{0,1\}, \{0,1\}, \dots, \{0,1\}],$$

where the elements in the vector $P_i$ refer to the different attributes of the product $i$, where $i$ may be an integer. Here, $\{0,1\}$ indicates that each element of the vectors $P_i$ may be either 0 or 1. For example, a product vector for some product may be $P_i = [0,0,1,0]$, where each element of the vector $P_i$ refers to the attribute of the corresponding index. The first element may refer, for example, to the product being organic, the second element may refer to the product being lactose free, the third element may refer to the product being low lactose, and the fourth element may refer to the product being vegan. Thus, in the example above, the product contains low amounts of lactose, but is not lactose free, organic, or vegan.

According to an embodiment, a user attribute profile vector 212 for a user with user ID $k$ can be computed in the following way

$$U_k = \left[ \frac{\sum_{i|1|k} P_i[1]}{n_{k|1}}, \frac{\sum_{i|2|k} P_i[2]}{n_{k|2}}, \dots, \frac{\sum_{i|N|k} P_i[N]}{n_{k|N}} \right].$$

$P_i[j]$ refers to the $j$th element of the product attribute vector $P_i$. The sum over $i|j|k$ represents summing over all products $i$ that the user $k$ has purchased and for which the attribute $j$ is relevant, and $n_{k|j}$ is the total number of products the user $k$ has purchased for which the attribute $j$ is relevant. $N$ is the length of the user attribute profile vector $U_k$. $N$ may be, for example, the total number of attributes. Alternatively, each element corresponding to index $j$ in the user attribute profile vector $U_k$ can be represented as

$$U_k[j] = \frac{\sum_{i|j|k} P_i[j]}{n_{k|j}}.$$

In other embodiments, other actions 102 may be taken into account in a similar manner when calculating the user attribute profile vector 212. In such embodiments, different weighting factors may be used for different types of actions. For example, purchase of a product may be considered to be more significant than viewing a product, and therefore purchases may be weighted more than viewings.

According to an embodiment, the computing apparatus 200 is configured to calculate the similarity score 232 by comparing corresponding attribute values in the attribute profile vector 212 and in the product attribute vector 223. The comparison can be done, for example, by subtracting the corresponding attribute values and taking the absolute value: $|P_i[j] - U_k[j]|$.

According to an embodiment, a similarity score 232 $D_{i,k}$ between a product attribute vector $P_i$ and a user attribute profile vector $U_k$ can be calculated in the following way

$$D_{i,k} = \frac{\sum_{j|i} |P_i[j] - U_k[j]|}{n_{j|i}},$$

where summation over $j|i$ is a summation over all attributes $j$ relevant to the product $i$, and $n_{j|i}$ is the total number of attributes relevant to the product $i$. $\|$ is the absolute value, which may also be referred to as modulus. Thus, the similarity score 232 $D_{i,k}$ may quantify how similar the product $i$ is to the previous actions 102 of the user $k$. If the equation above is used to calculate the similarity score 232 $D_{i,k}$, the value of $D_{i,k}$ may be between 0 and 1, where a lower value indicates a higher similarity. For example, if the corresponding attribute values in the product attribute vector $P_i$ and in the user attribute profile vector $U_k$ are equal, all of the $P_i[j] - U_k[j]$ terms in the equation above are zero. Therefore, in such a case, the value of $D_{i,k}$ is zero. In other embodiments, different procedures may be used to calculate the similarity between a product attribute vector 223 and a user attribute profile vector 212.

According to another embodiment, the value of an attribute can be non-binary. For example, the value of an attribute may reflect a property of a product on a continuous measurement scale. The value $X$ of such attribute can be normalised to be between 0 and 1, for example, in the following fashion:

$$X^n = \frac{X - \min(X)}{\max(X) - \min(X)},$$

where $X^n$ is a normalised value of the attribute value $X$. Here, $\min(X)$ refers to the minimum possible value of $X$, and $\max(X)$ refers to the maximum possible value of $X$. For example, if $X$ refers to the amount of protein per 100 grams of a product, $\min(X) = 0g$ and $\max(X) = 100g$. If a product then comprises 10g of protein per 100g, $X = 10$, and $X^n = 0.1$. The limits $\min(X)$ and $\max(X)$ may also be chosen in other ways. For example, $\max(X)$ may be chosen to reflect a realistic maximum value. In the example presented above, $\max(X)$ may be lower than 100g, since it may be difficult to find a product with such high protein content. The value of $\max(X)$ may be determined, for example, by considering all products and finding a product that has the highest value of $X$.

According to another embodiment, a non-binary attribute value may be a category value. Such attribute value may be decomposed into a set of m binary attribute values in the product attribute vector 223 and in the user attribute profile 212. For example, a product may belong to one of three different groups $X_1$, $X_2$, $X_3$, and a non-binary attribute may indicate which group the product belongs to. This may be decomposed into three binary attributes, where each attribute may be of the form "part of group $X_n$". For example, if a product belongs to group $X_2$, values of the attributes "part of group $X_1$" and "part of group $X_3$" could be 0, while the value of the attribute "part of group $X_2$" could be 1. Since a single non-binary category attribute may be decomposed into multiple binary attributes, the effect of this non-binary attribute may be over emphasised when calculating the similarity score $D_{i,k}$. To mitigate this, the similarity score may be calculated in the following way so that the weight of a non-binary category attribute is, for example, equal to binary attributes:

$$D_{i,k} = \frac{\sum_{j|i} \left( \sum_m \frac{1}{m-1} |P_i[j] - U_k[j]| \right)}{n_{j|i}}.$$

In addition taking into account the similarity score $D_{i,k}$ between a product and a user 101, also the action history 211 of the user 101 may be taken into account in the assessment of which products may be relevant to a user 101. According to an embodiment, the computing apparatus 200 is further configured to calculate an ordering score for each product in the plurality of products based on a location of the product and locations of previously purchased products by the user in a product tree. The computing apparatus 200 may be further configured to order the plurality of products using the ordering score of each product and the similarity score 232 of each product.

Ordering score $M_{i,k}$ between a product $i$ and a user $k$ may be calculated, for example, in the following way:

$$M_{i,k} = \begin{cases} wD_{i,k} + (1-w)\dfrac{\max(R_{i,k})}{R_{i,k}} \times \min_{R_{i,k}>0}(R_{i,k}), & R_{i,k} > 0 \\ wD_{i,k} + (1-w)\max(R_{i,k}), & R_{i,k} = 0 \end{cases}.$$

where $D_{i,k}$ can be the calculated similarity score 232 described above. $w$ is a weight factor which can be configured to emphasise the similarity score $D_{i,k}$ or the following term. $R_{i,k} = N_i/N$, where $N$ is the total number of purchases by the user $k$, and $N_i$ is the number of purchases done by the user $k$ in a node of a product tree that comprises the product $i$. In other embodiments, other action 102 may also be taken into account. $\max(R_{i,k})$ is the maximum of this quantity for

$$\min_{R_{i,k}>0}(R_{i,k})$$

the user $k$, and is the non-zero minimum of this quantity for the user $k$. Alternatively, $N_i$ and $N$ may refer to the value, volume, margin, or revenue of the aforementioned products. Furthermore, the calculations presented above may be performed for some time interval, so that only purchases during that time interval are taken into account.

For example, the similarity score 232 of the food product attribute vector 223 of FIG. 6 and the user attribute profile 212 of FIG. 11 can be computed with the equations described above. If it is assumed that all relevant attributes of the food product of FIG. 6 are presented in the product attribute vector 223 of FIG. 6, the total number of attributes relevant to the food product is 7. Therefore, for this example, the similarity score 232 can be calculated to be

$$D_{i,k} = (|1 - 0.1| + |0 - 0.01| + |1 - 0.126| + |0 - 0.148| + |1 - 0.42|$$
$$+ |0 - 0.3| + |0 - 0.72|)/7 \approx 0.505.$$

If the attribute corresponding to attribute ID 7 in FIG. 6, indicating high protein content of the food product, is switched to 1 in the product attribute vector 223 and other attributes are kept as presented in FIG. 6, the value of the similarity score 232 $D_{i,k}$ changes to approximately 0.442. This indicates that a product with a high protein content is more similar to the previous actions of the user profile 212 presented in FIG. 11 than an otherwise similar product with a low protein content, because 0.442 < 0.505. Therefore, it may be beneficial to prefer products that comprise a high protein content rather than otherwise similar products that comprise low protein content when products are displayed to the user 101. However, it should be appreciated that the values of other attributes also affect which products should be displayed to the user 101.

Based on the similarity score 232, the computing apparatus 200 may decide which products to display to the user 101 and, for example, in which order. According to an embodiment, the computing apparatus 200 may calculate a similarity score 232 for each product in a subset of all products and display the products with the highest similarity. Alternatively, the computing apparatus 200 may choose the displayed products randomly from the similarity score distribution using, for example, some preconfigured statistical distribution. According to another embodiment, the computing apparatus 200 may calculate a similarity score 232 for a product and display the product to the user 101, if the similarity score is within some preconfigured limits. This may be repeated, for example, until a preconfigured number of displayed products is chosen. According to another embodiment, the computing apparatus 200 may calculate a similarity score 232 for each product in a plurality of products and order the products in the plurality of products according to the similarity scores 232. This may be applied, for example, to search results.

According to an embodiment, the computing apparatus 200 is configured to store each similarity score 232 in the user profile 210. The similarity scores 232 between user profiles 210 and product attribute vectors 223 may be pre-calculated for all users 101 or for some subset of all users 101. If the similarity scores 232 are pre-calculated for a user 101, these similarity scores 232 may be updated, for example, each time the user 101 performs an action 102. The pre-calculated similarity scores 232 may be stored in the user profile 210 or, for example, in a separate database. Alternatively or in addition to this, the similarity scores 232 may be calculated on-demand. For example, each time the similarity scores 232 of a user 101 are needed, the similarity scores 232 can be calculated again. The similarity scores 232 may be pre-calculated for some users, while the similarity scores 232 may be calculated on-demand for other users.

According to an embodiment, "high similarity" may refer to cases where a product attribute vector 223 and a user attribute profile 212 are similar. "Low similarity" may refer to cases where a product attribute vector 223 and a user attribute profile 212 are not similar. This similarity may be based on the similarity score 232. However, these terms are used independent of the details how the similarity score is calculated are do not necessarily describe the value of the similarity score 232. For example, when the similarity score 232 is calculated using the equations presented above, a low similarity score 232, for example close to zero, may indicate a high similarity and vice versa. The exact limits for high and low similarity may vary.

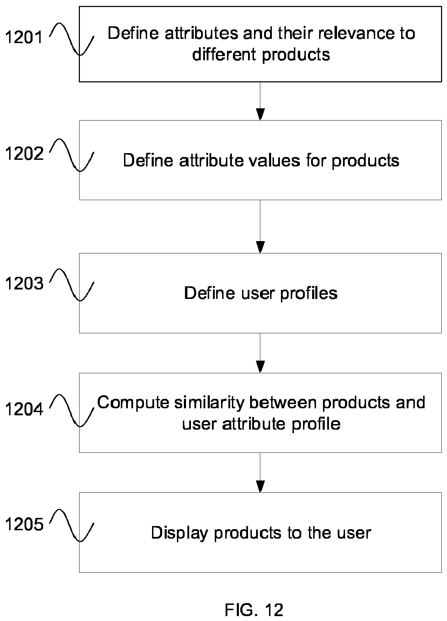

FIG. 12 illustrates a schematic representation of a flow chart of a procedure for displaying relevant products to a user 101 according to an embodiment. In operation 1201, relevant attributes 224 are defined for different products. Each product can be associated with a varying number of relevant attributes 224. In operation 1202, values 225 of the attributes for the products can be defined. The attribute values 225 can be stored, for example, in product attribute vectors 223. For example, a value 1 may indicate that the attribute is true for that product, and a value 0 may indicate that the attribute is false for that product. In operation 1203, a user profile 210 can be defined. There can be a user profile 210 for each user 101. As described above, a user profile 210 may comprise a user action history 211. Additionally, the user profile 210 may comprise a user attribute profile vector 212, which can be calculated from the user action history 211. In operation 1204, similarity between products attribute vectors 223 and user attribute profiles 212 can be computed. In operation 1205, products can be displayed to the user 101 based on the similarity of the product attribute vectors 223 and user attribute profiles 212.

The operations 1201 - 1205 can be performed partially by the client device 100 and partially by the computing apparatus 200. For example, the computing apparatus 200 may perform the steps 1201, 1202, and 1204. Operation 1203 may be performed partially by the client device 100 and partially by the computing apparatus 200. For example, the user 101 may use the client device 100 to interact with the computing apparatus 200, and the computing apparatus 200 can define the user attribute profile based on these actions, such as purchases, 102. Operation 1205 can be performed partially by the client device 100 and partially by the computing apparatus 200. The computing apparatus 200 can, for example, order/rank products based on similarity scores 232 computed in operation 1204, and the client device 100 can use these ordering/rankings to display products to the user 101. According to another embodiment, the computing apparatus 200 may perform all of the operations 1201 - 1205.

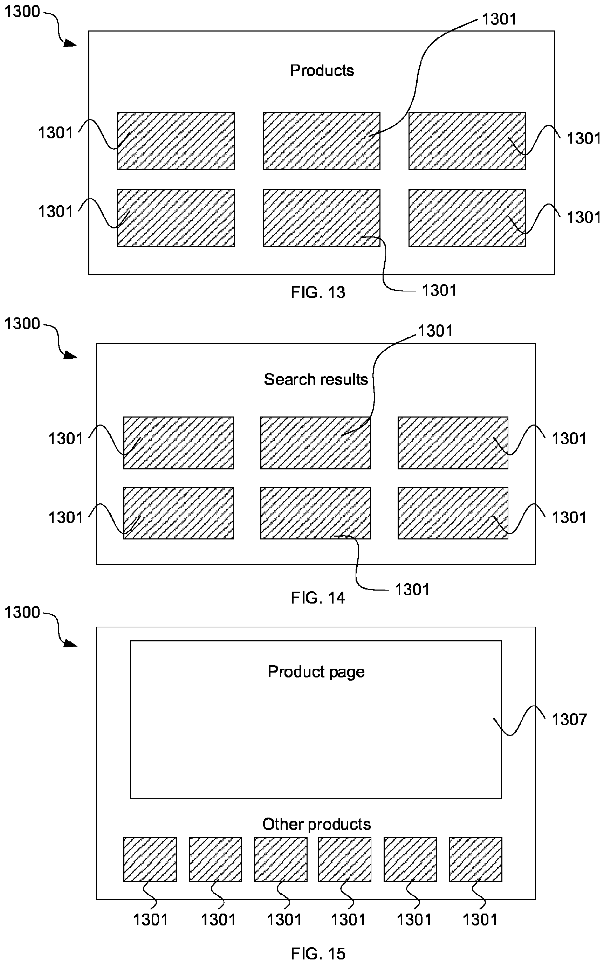

FIG. 13 illustrates a schematic representation of a product display interface 1300 according to an embodiment. The product display interface 1300 may be presented by the client device 100 to the user 101, and the content of the display interface 1300 can be based on data the client device 100 has received from the computing apparatus 200. The product display interface 1300 can, for example, be or be part of a starting page of a web site after a user 101 has logged in to the web site. Alternatively, the product display interface 1300 can be a separate page on a web site, for example, when the user 101 is viewing a product category. The user 101 may not be required to log into the web site. The product display interface 1300 comprises at least one product view 1301. The product views 1301 may display information about products. For example, a single product view 1301 may display a picture of a product, the name of the product, and the price of the product.

As can be seen from FIG. 13, the number of product views 1301 that can be presented to the user 101 at a time may be limited. The size of the product views 1301 cannot be reduced without limit, since the product views 1301 should be clearly visible to the user 101. The product views 1301 may also comprise a plurality of components that should also be clearly visible to the user 101. This may be especially limiting, if the client device 100 is, for example, a mobile phone with a relatively small display. On such client devices 100, only few product views 1301 may fit onto the product display interface 1300. The size and layout of the product views 1301 may be scaled depending on the client device 100. The scaling may be executed by the client device 100 and/or by the computing apparatus 200. For example, if the client device 100 is a mobile phone, the product views 1301 may be arranged into a single column so that the user 101 only needs to scroll the product display interface 1300 along a single direction while the products views 1301 are displayed with sufficient clarity. On a client device 100 with a larger display, such as a desktop computer, a plurality of product views 1301 may fit into the product display interface 1300 side-by-side.

Using the user attribute profile 212 and the product attribute vectors 223 of each product, the computing apparatus 200 may choose the way the products views 1301 are displayed in the product display interface 1300 in such a way that the displayed products may be relevant and/or interesting to the user 101. According to an embodiment, the computing apparatus 200 calculates a similarity score 232 for each product, and the product views 1301 are arranged in the product display interface 1300 according to the similarity scores 232 of the products. According to another embodiment, the computing apparatus 200 calculates an ordering score $M_{i,k}$ for each product, and the product views 1301 are arranged in the product display interface 1300 according to the ordering scores $M_{i,k}$ of the products. The computing apparatus 200 may, for example, generate a product ordering list which may comprise a plurality of products ordered according to the ordering score $M_{i,k}$ of each product. The order may be, for example, ascending or descending.

According to embodiments, other criteria may also be applied to the ordering of the product views 1301. For example, top *n* most purchased products and/or product groups may not be ordered to the top of the product views 1301. *n* can be any number. According to a further embodiment, products that are part of the same product tree node as any of *m* previous products in the product ordering list. *m* can be any number. According to another embodiment, if a plurality of products and/or product groups have the same similarity score 232 and/or ordering score $M_{i,k}$, a product with a higher priority may be put first. Priority may be calculated based on various quantities, such as margin, sell volume etc.

The computing apparatus 200 may improve the user experience by improving the utilisation of the limited display space. Additionally, since the user 101 may find relevant products more easily and more quickly, the power consumption and amount of transferred data to/from the client device 100 may be reduced. For example, if relevant products are ordered to be within the first product views 1301 in the product display interface 1300, the product views 1301 of less relevant products may not need to be displayed or loaded by the client device 100. Thus, the amount of transferred data may be reduced, since data, such as pictures, about less relevant products does not need to be transferred to the client device 100. These advantages may apply to all embodiments illustrated herein.

FIG. 14 illustrates a schematic representation of a product display interface 1300 according to another embodiment. In this embodiment, the product display interface 1300 may display search results, the search results can be displayed using the product views 1301, and the search results can be ordered based on the similarity scores 232 and/or the ordering scores $M_{i,k}$ of the products.

For example, if the user 101 searches for bread, different bread products may be ordered in the search results according to how well the product attribute vectors 223 of these products fit the user attribute profile 212 of the user 101. For example, if the user 101 searches for bread and the user attribute profile 212 indicates that the user 101 may prefer organic food products, the computing apparatus 200 may order different organic breads to the top of the search results. The computing apparatus 200 may calculate a similarity score 232 and/or ordering score $M_{i,k}$ for each bread product available based on the product attribute vector 223 of each bread product and the user attribute profile 212 of the user 101. If the user 101 prefers organic food products, the user attribute profile 212 should reflect this. In such a case, the similarity of organic breads may be higher with the user attribute profile 212 than that of other types of bread. The computing apparatus 200 and/or the client device 100 may then order the search results according to the similarity scores 232 and/or ordering scores of the products, and organic breads may be higher in the search results than other types of bread. It should be noted that this is only a simplified example, and other attributes may simultaneously affect the similarity scores and the ordering of the search results. Alternatively, this type of ordering may also be applied when the user 101 views a product category, such as "bread", instead of searching for bread.

FIG. 15 illustrates a schematic representation of a product display interface 1300 according to another embodiment. In this embodiment, product views 1301 can be displayed in the product display interface 1300 with a product page 1307. The user 101 may have decided to view some product on a web site, and information about that product may be displayed to the user 101 in the product page 1307. The product page 1307 may comprise, for example, a picture and the price of a product and a button to buy the product. The product views 1301 may be positioned, for example, at the bottom of the display interface 1300. The products displayed in the product views 1301 may be related/similar to the product displayed on the product page 1307. In such a case, the user attribute profile 212 may be used to display products that may suit the action history 211 and/or the user attribute profile 212 of the user 101 and that are related/similar to the product displayed on the product page 1307. Alternatively, the products displayed in the product views 1301 may not be related to the product displayed on the product page 1307, but they may be products that may, for example, fit the user attribute profile 212 of the user 101. For example, the computing apparatus 200 may calculate a similarity score 232 for a subset of products and high similarity products may be displayed in the product views 1301 based on these similarity scores 232.

Although in the embodiment described above, elements of the product display interface 1300 are illustrated using certain geometrical shapes, the elements may be of any shape and size, and they may be positioned in any way in the product display interface 1300. The elements of the product display interface 1300 may represent, for example, products or product related information. For example, the product views 1301 may be displayed as a list, as an array, or in any other order.

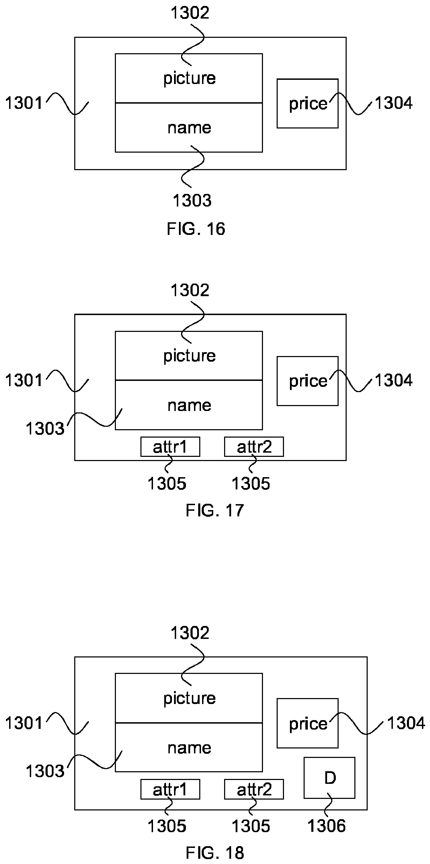

FIG. 16 illustrates a schematic representation of a product view 1301 according to an embodiment. In this embodiment, the product view 1301 comprises a picture 1302, the name 1303, and the price 1304 of a product. The product view 1301 may be used to display products to the user 101, for example, in the product display interface 1300.

FIG. 17 illustrates a schematic representation of a product view 1301 according to another embodiment. In this embodiment, the product view 1301 comprises a picture 1302, the name 1303, and the price 1304 of the product. Additionally, the client device can be configured to display an attribute 1305 in the at least one product view 1306, wherein the attribute is associated with the product attribute vector of a product displayed in the product view 1301. In the embodiment of FIG. 17, the product view 1301 comprises two attributes 1305 of the product. However, this is only an example, and the number of attributes 1305 displayed may vary. The displayed attributes 1305 may be, for example, the attributes of the product that are most similar with the user attribute profile 212 of the user 101 and/or are important to the user 101 based on the user profile 210. For example, in the case of the user attribute profile vector 212 presented in FIG. 11, the displayed attributes could be "high protein" and "vegetarian", if the values of these attributes is 1 in the product attribute vector 223 of the product.

FIG. 18 illustrates a schematic representation of a product view 1301 according to another embodiment. In this embodiment, the product view 1301 further comprises a displayed similarity score 1306. According to an embodiment, the computing apparatus 200 is configured to transmit the similarity score 232 to the client device 100. According to an embodiment, the client device 100 is configured to receive the calculated similarity score 232 from the computing apparatus and display the displayed similarity score 1306 in at least one product view 1301, wherein the displayed similarity score is associated with the calculated similarity score. The client device 100 can calculate the displayed similarity score 1306, for example, from the calculated score 232. Alternatively, the computing apparatus 200 may transmit the displayed similarity score 1306 to the client device 100. The displayed similarity score 1306 may indicate how relevant the product is to the user 101 based on the user attribute profile 212 and the product attribute vector 223. Alternatively, the displayed similarity score 1306 may be different from the calculated similarity score 232. For example, the displayed similarity score 1306 may be presented as a percentage. As described earlier, a calculated similarity score 232 close to 0 may indicate a high similarity between a product attribute vector 223 and a user attribute profile 212. The displayed similarity score 1306 may be computed from the calculated similarity score 232, for example, in such a way that a displayed similarity score 1306 close to 100% indicates a high similarity and displayed similarity score 1306 close to 0% indicates a low similarity.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as embodiments of implementing the claims and other equivalent features and acts are intended to be within the scope of the claims.

The functionality described herein can be performed, at least in part, by one or more computer program product components such as software components. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur.

The operations of the methods described herein may be carried out in any suitable order, or simultaneously where appropriate. Additionally, individual blocks may be deleted from any of the methods without departing from the objective and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, embodiments and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. A computing apparatus (200), configured to:

   calculate a user attribute profile vector (212) based on a user action history (211) of a user (101); and
   calculate a similarity score between the user attribute profile vector and a product attribute vector (223) of a product, wherein only attributes that are relevant to the product are used for the calculation from the user attribute profile vector.

2. The computing apparatus of claim 1, further configured to:
   process an order for a plurality of products using at least the similarity score of each product.

3. The computing apparatus of any preceding claim, further configured to:
   transmit data indicating the processed order of the plurality of products to a client device (100).

4. The computing apparatus of any preceding claim, further configured to:
   transmit each similarity score to the client device.

5. The computing apparatus of any preceding claim, wherein the user action history comprises a purchase history of the user.

6. The computing apparatus of any preceding claim, wherein the attributes that are relevant to the product are indicated by the product attribute vector of the product.

7. The computing apparatus of any preceding claim, further configured to:
   calculate the similarity score by comparing corresponding attribute values in the attribute profile vector and in the product attribute vector.

8. The computing apparatus of any of any preceding claim, wherein the product attribute vector comprises:

   a logical true value, indicating that a corresponding attribute is true for the product; and
   a logical false value, indicating that a corresponding attribute is false for the product.

9. The computing apparatus of any preceding claim, wherein each attribute value in the user attribute profile vector is in range of 0 to 1.

10. The computing apparatus of any preceding claim, further configured to:

calculate an ordering score for each product in the plurality of products based on a location of the product and locations of previously purchased products by the user in a product tree; and

order the plurality of products using the ordering score of each product and the similarity score of each product.

11. The computing apparatus of any preceding claim, further configured to:
store the user attribute profile vector in a user profile (210) of the user.

12. The computing apparatus of any preceding claim, further configured to:
store each similarity score in the user profile.

13. A client device (100), configured to:

receive data indicating an order of a plurality of products from a computing apparatus (200);
display at least one product view (1301) to a user (101) according to the order indicated by the data received from the computing apparatus, wherein each product view in the at least one product view comprises:
a name (1303) of a product; and
a price (1304) of the product;

wherein the order of the plurality of products is based on a calculated similarity score (232) between a user attribute profile vector (212) of the user and a product attribute vector (223) of each product in the plurality of products, wherein only attributes that are relevant to the product are used for the calculation from the user attribute profile vector.

14. The client device of claim 13, further configured to:

receive the calculated similarity score from the computing apparatus; and
display a displayed similarity score (1306) in the at least one product view, wherein the displayed similarity score is associated with the calculated similarity score.

15. The client device of any of claim 13 - 14, further configured to:
display an attribute (1305) in the at least one product view, wherein the attribute is associated with the product attribute vector of a product displayed in the product view.

16. A method, comprising:

calculating a user attribute profile vector based on a user action history of a user; and
calculating a similarity score between the user attribute profile vector and a product attribute vector of each product in a plurality of products, wherein only attributes that are relevant to the product are used for the calculation from the user attribute profile vector.

17. A method, comprising:

receiving data indicating an order of a plurality of products from a computing apparatus;
displaying at least one product view to a user according to the order indicated by the data received from the computing apparatus, wherein each product view in the at least one product view comprises:

a name of a product; and
a price of the product;

wherein the order of the plurality of products is based on a calculated similarity score between a user attribute profile vector of the user and a product attribute vector of each product in the plurality of products, wherein only attributes that are relevant to the product are used for the calculation from the user attribute profile vector.

18. A computer program, comprising program code configured to perform a method according to claim 16 or claim 17 when the computer program is executed on a computer.

FIG. 1

FIG. 2

FIG. 3

FIG. 4

223

| product | |
|---|---|
| **attribute** | **value** |
| attr1 | {0,1} |
| attr2 | {0,1} |
| attr3 | {0,1} |
| attr4 | {0,1} |
| attr5 | {0,1} |

224 — attribute    value — 225

**FIG. 5**

223    224

| food product | | |
|---|---|---|
| **ID** | **attribute** | **value** |
| 1 | organic | 1 |
| 2 | lactose free | 0 |
| 3 | low lactose | 1 |
| 4 | vegan | 0 |
| 5 | vegetarian | 1 |
| 6 | gluten free | 0 |
| 7 | high protein | 0 |

226 — ID    attribute    value — 225

**FIG. 6**

223    224

| hygiene product | | |
|---|---|---|
| **ID** | **attribute** | **value** |
| 8 | dry skin | 1 |
| 9 | allergy | 0 |
| 10 | sensitive skin | 1 |
| 4 | vegan | 0 |
| 1 | organic | 1 |

226 — ID    attribute    value — 225

**FIG. 7**

223

224

| hygiene product | | |
|---|---|---|
| ID | attribute | value |
| 1 | organic | 1 |
| 2 | lactose free | n/a |
| 3 | low lactose | n/a |
| 4 | vegan | 0 |
| 5 | vegetarian | n/a |
| 6 | gluten free | n/a |
| 7 | high protein | n/a |
| 8 | dry skin | 1 |
| 9 | allergy | 0 |
| 10 | sensitive skin | 1 |

226    225    225'

FIG. 8

211

| user | |
|---|---|
| **product ID** | **number purchased** |
| ID1 | n1 |
| ID2 | n2 |
| ID3 | n3 |
| ID4 | n4 |
| ID5 | n5 |

901 / product ID    902 / number purchased

FIG. 9

212

224

| user | | |
|---|---|---|
| **attr ID** | **attribute** | **value** |
| ID1 | attr1 | 0...1 |
| ID2 | attr2 | 0...1 |
| ID3 | attr3 | 0...1 |
| ID4 | attr4 | 0...1 |
| ID5 | attr5 | 0...1 |

226 / attr ID    213 / value

FIG. 10

212

224

| user | | |
|---|---|---|
| **ID** | **attribute** | **value** |
| 1 | organic | 0.1 |
| 2 | lactose free | 0.01 |
| 3 | low lactose | 0.126 |
| 4 | vegan | 0.148 |
| 5 | vegetarian | 0.42 |
| 6 | gluten free | 0.3 |
| 7 | high protein | 0.72 |

226 / ID    213 / value

FIG. 11

1201 — Define attributes and their relevance to different products

1202 — Define attribute values for products

1203 — Define user profiles

1204 — Compute similarity between products and user attribute profile

1205 — Display products to the user

FIG. 12

1300

1301

Products

1301

1301

1301

1301

1301

1301

FIG. 13

1300

1301

Search results

1301

1301

1301

1301

1301

FIG. 14

1300

Product page

1307

Other products

1301 1301 1301 1301 1301 1301

FIG. 15

1302

1301

picture

name

price 1304

1303

FIG. 16

1302

1301

picture

name

price 1304

1303

attr1    attr2

1305    1305

FIG. 17

1302

1301

picture

name

price 1304

1303

attr1    attr2    D

1305    1305    1306

FIG. 18

Europäisches
Patentamt

European
Patent Office

Office européen
des brevets

# EUROPEAN SEARCH REPORT

Application Number

EP 18 18 4120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2013/198022 A1 (ZHANG WEI [CN]) 1 August 2013 (2013-08-01) * the whole document * | 1-18 | INV. G06Q30/06 G06Q30/02 |
| X,D | GB 2 548 336 A (SKY CP LTD [GB]) 20 September 2017 (2017-09-20) * the whole document * | 1-18 | |
| X,D | US 2017/337612 A1 (GALRON DANIEL [US] ET AL) 23 November 2017 (2017-11-23) * the whole document * | 1-18 | |
| X | US 2011/145226 A1 (GOLLAPUDI SREENIVAS [US] ET AL) 16 June 2011 (2011-06-16) * the whole document * | 1-18 | |
| X | WO 2017/095371 A1 (HEWLETT PACKARD ENTPR DEV LP [US]) 8 June 2017 (2017-06-08) * the whole document * | 1-18 | |
| X | US 2015/073931 A1 (RONEN ROYI [IL] ET AL) 12 March 2015 (2015-03-12) * the whole document * | 1-18 | TECHNICAL FIELDS SEARCHED (IPC) G06Q |
| X | WO 2007/024736 A2 (BIAP SYSTEMS INC [US]; SLOTHOUBER LOUIS P [US]) 1 March 2007 (2007-03-01) * the whole document * | 1-18 | |

The present search report has been drawn up for all claims

| Place of search | Date of completion of the search | Examiner |
|---|---|---|
| The Hague | 3 October 2018 | van der Weiden, Ad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 4120

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2018

| Patent document cited in search report | | Publication date | Patent family member(s) | | Publication date |
|---|---|---|---|---|---|
| US 2013198022 | A1 | 01-08-2013 | CN 102456203 A<br>EP 2630625 A1<br>HK 1166412 A1<br>JP 5897019 B2<br>JP 2013544000 A<br>TW 201218105 A<br>US 2013198022 A1<br>WO 2012054488 A1 | | 16-05-2012<br>28-08-2013<br>30-06-2016<br>30-03-2016<br>09-12-2013<br>01-05-2012<br>01-08-2013<br>26-04-2012 |
| GB 2548336 | A | 20-09-2017 | GB 2548336 A<br>WO 2017153721 A1 | | 20-09-2017<br>14-09-2017 |
| US 2017337612 | A1 | 23-11-2017 | NONE | | |
| US 2011145226 | A1 | 16-06-2011 | NONE | | |
| WO 2017095371 | A1 | 08-06-2017 | NONE | | |
| US 2015073931 | A1 | 12-03-2015 | US 2015073931 A1<br>WO 2015034850 A2 | | 12-03-2015<br>12-03-2015 |
| WO 2007024736 | A2 | 01-03-2007 | AU 2006283553 A1<br>CA 2619773 A1<br>EP 1924922 A2<br>JP 5032477 B2<br>JP 2009505298 A<br>US 2007078849 A1<br>WO 2007024736 A2 | | 01-03-2007<br>01-03-2007<br>28-05-2008<br>26-09-2012<br>05-02-2009<br>05-04-2007<br>01-03-2007 |

EPO FORM P0459

For more details about this annex : see Official Journal of the European Patent Office, No. 12/82

**EP 3 598 373 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130198022 A1
- GB 2548336 A
- US 20170337612 A1